Europäisches Patentamt

European Patent Office

Office européen des brevets

(11) Veröffentlichungsnummer : **0 370 250 B1**

## (12) EUROPÄISCHE PATENTSCHRIFT

(45) Veröffentlichungstag der Patentschrift :
08.07.92 Patentblatt 92/28

(21) Anmeldenummer : 89119708.9

(22) Anmeldetag : 24.10.89

(51) Int. Cl.⁵ : **B60J 7/08,** B60J 7/043

54 **Ausstellbares Dachteil für Kraftwagen.**

(30) Priorität : **22.11.88 DE 3839402**

(43) Veröffentlichungstag der Anmeldung :
**30.05.90 Patentblatt 90/22**

(45) Bekanntmachung des Hinweises auf die
Patenterteilung :
**08.07.92 Patentblatt 92/28**

(84) Benannte Vertragsstaaten :
**AT BE DE ES FR GB IT NL SE**

(56) Entgegenhaltungen :
**EP-A- 0 183 452**
**EP-A- 0 256 575**
**DE-A- 3 538 878**
**FR-A- 2 185 037**
**GB-A- 2 029 345**
**GB-A- 2 164 006**

(73) Patentinhaber : **GABEL GMBH**
**Carl-vom-Hagen-Str. 11**
**W-5830 Schwelm (DE)**

(72) Erfinder : **Schürmann, Erich, Prof. Dr.-Ing.**
**Wittenberg 1**
**W-4415 Sendenhorst (DE)**

(74) Vertreter : **Ostriga, Harald, Dipl.-Ing. et al**
**Patentanwälte Dipl.-Ing. Harald Ostriga**
**Dipl.-Ing. Bernd Sonnet Stresemannstrasse**
**6-8**
**W-5600 Wuppertal 2 (DE)**

## Beschreibung

Die Erfindung betrifft ein ausstellbares Dachteil für Kraftwagen, insbesondere lichtdurchlässiges Sonnendach mit einer Dachscheibe aus Glas o.dgl. entsprechend dem Oberbegriff des Patentanspruchs 1.

Ein derartiges Dachteil ist durch die EP-A- 59 859 bekanntgeworden. Die Dachscheibe dieses bekannten Dachteils ist konvex nach außen vorgebogen. Um eine gleichmäßige zug- und wasserdichte Anlage der Dachscheibe an dem die Dachteilöffnung umrahmenden Dichtungskeder zu erzielen, muß der ausstellbare Dachscheibenverschluß in seiner Schließstellung eine große Schließkraft aufbringen. Diese muß so groß sein, daß sich die Dachscheibe in ihrer Schließlage unter elastischer Verformung abflacht.

Das Dachteil gemäß der EP-A- 59 859 weist als Dachscheiben-Verschluß einen Kniehebelverschluß auf, welcher am Dachscheibenrand, der den beiden Befestigungsgelenken gegenüberliegt mittig angreift. Der bekannte Kniehebelverschluß, dessen Kniehebel zwei Verschlußteile bildet, ermöglicht zwar eine sichere, dichte Schließposition der Dachscheibe, jedoch erfordert der bekannte Dachscheibenverschluß eine große Betätigungskraft. Diese große Betätigungskraft kommt - wie bei jedem Kniehebelverschluß - dadurch zustande, daß zum Erreichen der Übertotpunktlage zuvor ein Kraftmaximum in der Totpunktlage überwunden werden muß. Dieses Kraftmaximum ist erheblich größer als die für eine sichere Schließlage erforderliche Schließkraft.

Ausgehend von dem bekannten ausstellbaren Dachteil (EP-A- 59 859), liegt der Erfindung die Aufgabe zugrunde, ein solches in vorteilhafter Weise zug- und wasserdicht schließendes Dachteil mit einem Dachscheiben-Verschluß zu versehen, welcher mit einer verhältnismäßig geringen Bedienungskraft bequem zu schließen ist. Diese Aufgabe wurde entsprechend dem Kennzeichenteil des Patentanspruchs 1 gelöst.

Während bei dem bekannten Kniehebelverschluß ein Verschlußteil aus einem an der Dachscheibe angelenkten Kniehebel und das zweite Verschlußteil aus einem raumfest mittelbar am Fahrzeugdach (am Rahmen des Dachteils) angelenkten zweiten Kniehebel (zusätzliches Verschlußteil) besteht, verfolgt die Erfindung eine gänzlich andere Konzeption: Das eine Verschlußteil ist ein in seiner entspannten Position vorgekrümmter Biegestab, dessen eines Ende sich auf einem fahrzeugdachseitigen Widerlager abstützt und dessen anderes Ende die Dachscheibe im Öffnungssinne beaufschlagt. Um die Dachscheibe zu schließen, genügt es, den Biegestab aus seiner gekrümmten Position (geöffnete Dachscheibe) in seine gestreckte Position zu versetzen. Hierzu sieht die Erfindung das andere Verschlußteil in Form einer Führungsbahn vor, an welche der Biegestab mittels eines sowohl an der Führungsbahn geführten als auch den Biegestab führenden Schiebers angenähert werden kann.

Die bevorzugte Ausführungsform der Erfindung besteht darin, daß die starre Führungsbahn zwischen zwei diametral gegenüberliegenden Dachrahmen-Schenkeln befestigt ist, während ein Anlenkungsende des Biegestabes im wesentlichen zug- und druckfest an der Dachscheibe angelenkt ist und dieses im Öffnungssinne beaufschlagt. Die kinematische Umkehrung dieser bevorzugten Ausführungsform besteht darin, daß die Gleitbahn, auf welcher der Schieber läuft, unterhalb innenseitig an der Dachscheibe selbst befestigt ist, während der elastische Biegestab zwischen den beiden diametral gegenüberliegenden Dachrahmenschenkeln befestigt ist.

Der Dachscheiben-Verschluß des erfindungsgemäßen Dachteils wirkt in vorteilhafter Weise so, daß er bereits bei Beginn der Schieber-Schließbewegung den größten Schließweg erbringt, welcher sich im weiteren Verlauf der Schließbewegung zunehmend verringert, so daß zum Ende der Schließbewegung praktisch nur noch eine Zuhaltebewegung bzw. eine Sicherungsbewegung im Bereich der Selbsthemmung zwischen Schieber und Biegestab erfolgt, während der Schließweg selbst nahezu Null ist. Hieraus resultiert ein sehr großes Übersetzungsverhältnis mit der positiven Folge, daß zum Ende der Schließbewegung eine sehr große Schließkraft bei geringem Kraftaufwand erzielt wird. Der erfindungsgemäße Dachscheibenverschluß ist daher bedienungsfreundlich, d.h. er ist bequem zu handhaben.

Entsprechend einer weiteren vorteilhaften Ausgestaltung der Erfindung besteht der Biegestab aus einer Blattfeder, die insbesondere aus Federstahl gefertigt sein kann.

Weitere vorteilhafte Ausgestaltungen entsprechend der Erfindung sind den Unteransprüchen zu entnehmen.

In den Zeichnungen ist die Erfindung anhand bevorzugter Ausführungsbeispiele näher dargestellt, es zeigen,

Fig. 1 eine schematische perspektivische isolierte Darstellung eines ausstellbaren Dachteils in Offenstellung seiner Dachscheibe mit einer stellenweise weggebrochen gezeichneten, die Dachscheibe unterstützenden Flachstrebe,

Fig. 2-4 eine noch mehr schematisierte Darstellung des ausstellbaren Dachteils gemäß Fig. 1 im Längsschnitt von einer Schließstellung (Fig. 2) über eine mittlere Öffnungsstellung (Fig. 3) bis zu einer maximalen Öffnungsstellung (Fig. 4) der Dachscheibe,

Fig. 5 eine Darstellung in Anlehnung an Fig. 1; das hier gezeigte ausstellbare Dachteil ist als geöffnetes Gleit-Hebedach ausgebildet,

Fig. 6 das Gleit-Hebedach gemäß Fig. 5 in seiner geöffneten und entgegen der Fahrtrichtung zurückgeschobenene Position,

Fig. 7-10 das Gleit-Hebedach gemäß den Fig. 5 und 6 zunächst in Schließstellung der Dachscheibe (Fig. 7), sodann in einer mittleren Öffnungsstellung der Dachscheibe (Fig. 8), nachfolgend in gänzlich geöffneter Stellung der Dachscheibe (Fig. 9) und letztlich in zurückgeschobener und geöffneter Stellung der Dachscheibe (Fig. 10),

Fig. 11 eine an Fig. 9 angelehnte Darstellung einer anderen Ausführungsform,

Fig. 12 ein vergrößert dargestelltes Detail entsprechend der mit XII bezeichneten Einkreisung in Fig. 11,

Fig. 13 einen Querschnitt vergrößerter Darstellung entsprechend der Schnittlinie XIII-XIII in Fig. 7,

Fig. 14 eine schematische Draufsicht auf ein motorisch ausstellbares Dachteil (ein Biegestab ist hierbei weggelassen, eine die Dachscheibe unterstützende Flachstrebe ist durchsichtig gezeichnet),

Fig. 15 einen im Vergleich zu Fig. 14 vergrößerten Längsschnitt durch den in Fig. 14 mit XV bezeichneten eingekreisten Bereich,

Fig. 16 in Anlehnung an Fig. 14 das motorisch ausstellbare Dachteil als Gleithebedach,

Fig. 17 einen im Vergleich zu Fig. 16 vergrößerten Längsschnitt durch den in Fig. 16 mit XVII bezeichneten eingekreisten Bereich, und

Fig. 18 in Anlehnung an Fig. 4 eine geometrisch umgekehrte Anordnung.

In den Zeichnungen ist jedes ausstellbare Dachteil unabhängig von seiner Ausgestaltung mit der Bezugsziffer 10 bezeichnet. Das Dachteil 10 weist einen in einem Dachausschnitt eines Fahrzeugdachs 12 befestigbaren ein- oder mehrteiligen Dachrahmen 11 auf.

Die vom Dachrahmen 11 umgrenzte Dachteil-Öffnung 13 kann durch eine Dachscheibe 14 geschlossen oder freigegeben werden. Am vorderen bzw. ersten Scheibenrand 15 ist die Dachscheibe 14 mittels eines mittig an der Scheibe angeordneten Befestigungsgelenks 16 am vorderen Dachrahmenschenkel 17 schwenkbar befestigt. Hierzu ist am vorderen Dachrahmenschenkel 17 zunächst eine Gelenkkonsole 18 vorgesehen, während das andere Teil des Befestigungsgelenks 16 vom vorderen Bereich einer innenseitig der Dachscheibe 14 befestigten Flachstrebe 19 gebildet ist, welche ein von der Innenfläche 40 der Dachscheibe 14 weg offenes U-Profil darstellt. Die Flachstrebe 19 kann mit der Innenfläche 40 der Dachscheibe 14 beispielsweise verklebt, ggf. verschweißt oder aber durch eine Schraubverbindung gehalten sein. Die Gelenkachse des Befestigungsgelenks 16 ist mit x bezeichnet.

Zwischen dem vorderen Dachrahmenschenkel 17 und dem hinteren Dachrahmenschenkel 20 ist innerhalb der Dachteilöffnung 13 eine eine Führungsbahn (Gleitbahn) 21 für einen Schieber 22 darstellende Verbindungsstrebe 23 befestigt. Oben auf der Verbindungsstrebe 23 ist ein vorderes Ende 24 eines in seiner entspannten Lage vorgekrümmten federelastischen Biegestabes, hier einer Blattfeder 25, festgelegt. Das hintere Ende 26 (Anlenkungsende) der Blattfeder 25 ist mittels eines relativ kurzen Lenkers 27 in der Nähe des zweiten (hinteren) Scheibenrandes 28 im wesentlichen zug- und druckfest angelenkt. Der Lenker 27 ist einmal über ein Gelenk 29 an der Innenfläche 40 der Dachscheibe 14 und über ein an seinem anderen Ende angeordnetes Gelenk 30 mit dem hinteren Ende 26 der Blattfeder 25 verbunden.

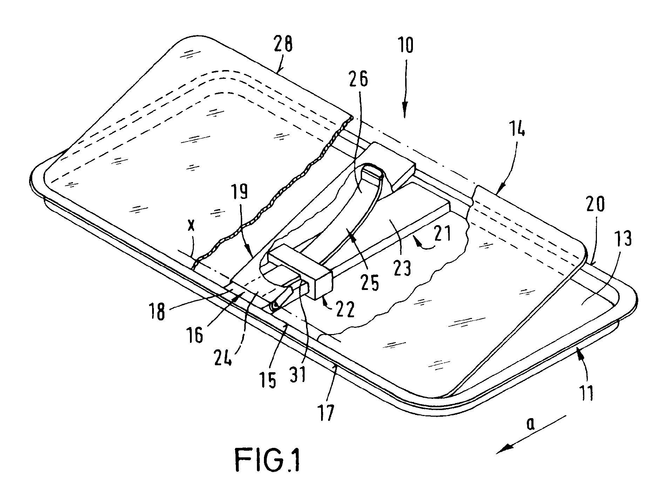

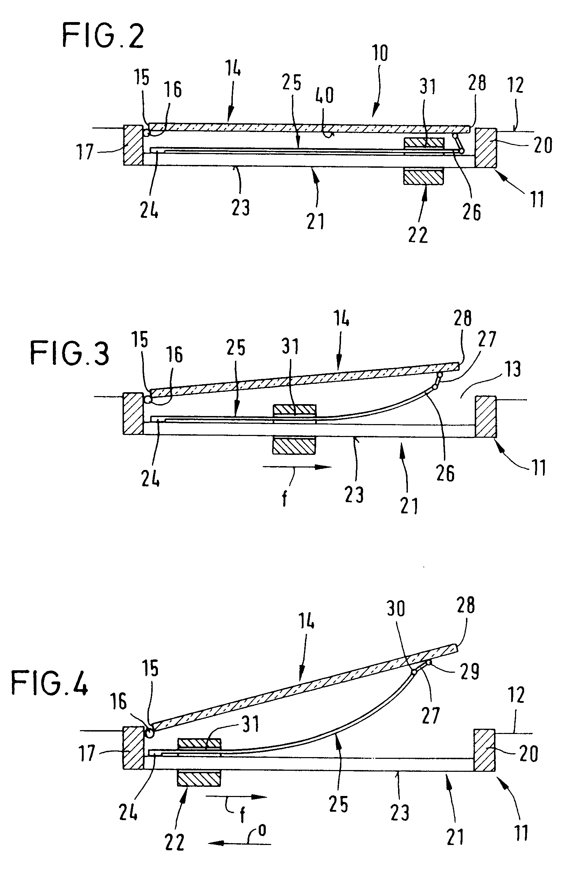

Wie insbesondere aus den Fig. 1 und 4 zu ersehen ist, hält die entspannte gekrümmte Blattfeder 25 mit einem Widerlager bei 24 und einem anderen Widerlager bei 26 die Dachscheibe 14 in ihrer geöffneten Position.

Innerhalb eines Gleitführungsschlitzes 31 oberhalb der Verbindungsstrebe 23 führt der auf der Verbindungsstrebe 23 translatorisch bewegliche Schieber 22 zugleich die Blattfeder 25. Wenn nun der Schieber 22 in Richtung f verschoben wird, nähert sich die Blattfeder 25 zunehmend (s. Fig. 3) der Verbindungsstrebe 23 so lange an, bis die Blattfeder 25 ihren gestreckten Zustand (Fig. 2) erreicht und die Dachscheibe 14 in ihre Schließposition versetzt hat. Die Öffnungsbewegung des Schiebers 22 verläuft umgekehrt in Richtung o.

Ergänzend bleibt noch zu erwähnen, daß der in der umlaufenden Laibung des Dachrahmens 11 üblicherweise angeordnete Dichtungskeder aus Gründen einer Zeichnungsvereinfachung in den Zeichnungen nicht dargestellt ist.

Aus den Darstellungen wird deutlich, daß mit der anfänglichen Schließbewegung (s. Fig. 4 und 3) ein relativ großer Schließhub erzielt wird, welcher sich zugunsten einer immer geringer werdenden Bedienungskraft wegen des dann vorliegenden großen Überseztungsverhältnisses stetig verringert.

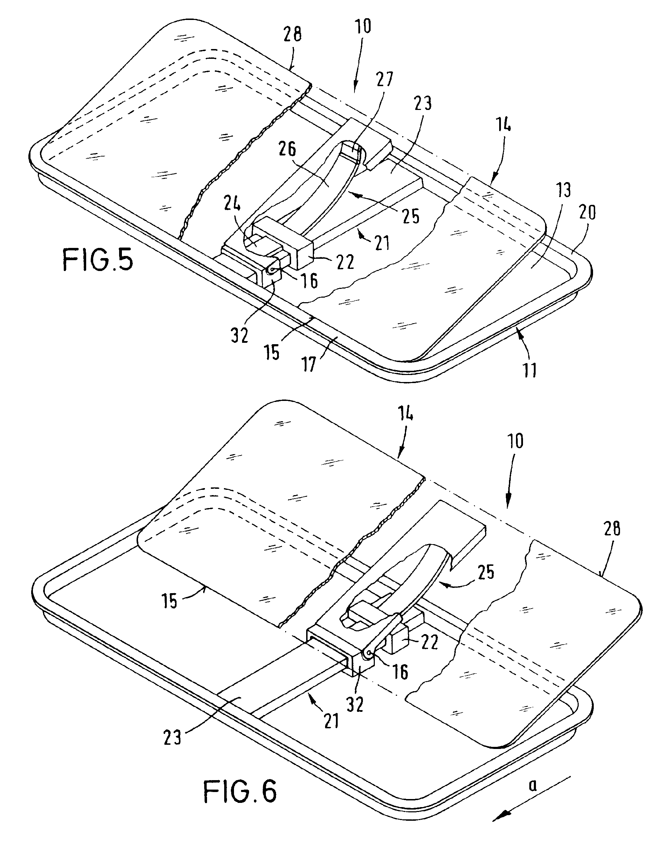

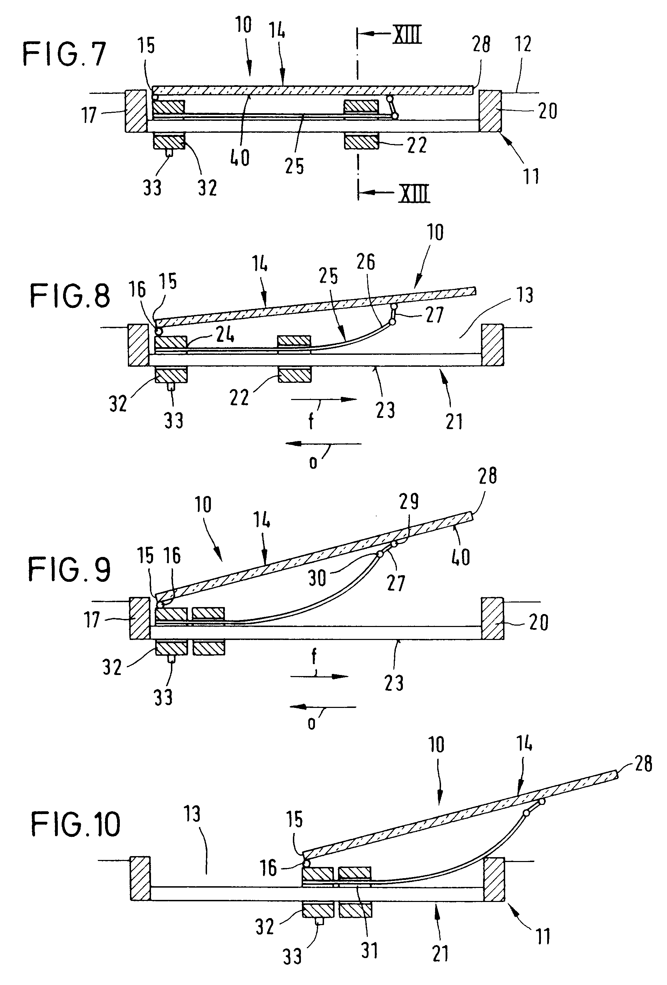

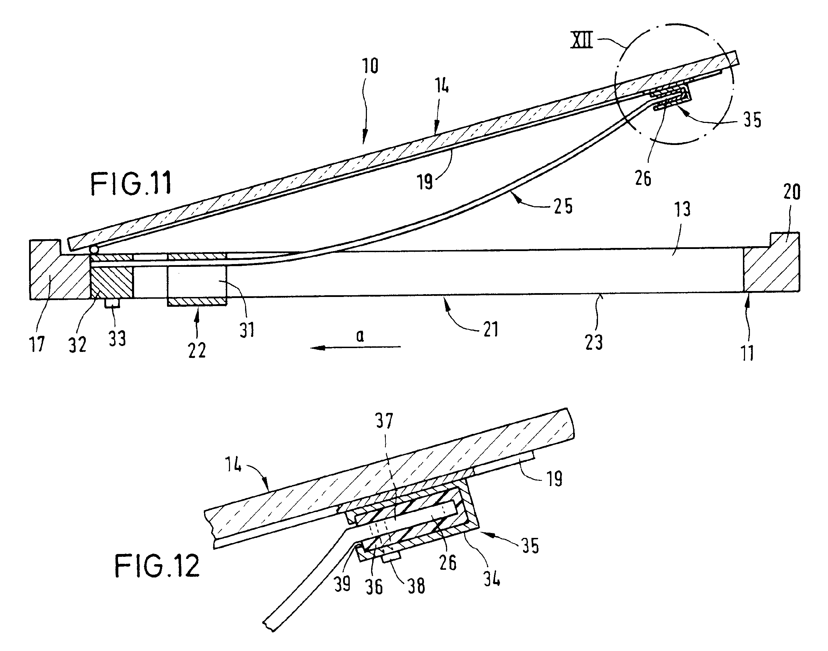

Die in den Fig. 5-10 dargestellte Ausführungsform (s. ebenfalls Fig. 11) unterscheidet sich von der Ausführungsform gemäß den Fig. 1-4 im wesentlichen dadurch, daß das Befestigungsgelenk 16 nicht am vorderen Dachrahmenschenkel 17 sondern vielmehr auf einer gesonderten Konsole 32 befestigt ist. Entsprechend den Fig. 7-9 kann der Schieber 22 sowohl in Schließrichtung f als auch in Öffnungsrichtung o ebenso verschoben werden wie beim Ausführungsbeispiel gemäß den Fig. 1-4. Beim Ausführungsbeispiel gemäß den Fig. 5-10 ist es jedoch außerdem möglich, bei Offenstellung der Dachscheibe 14 die Konsole 32 gemeinsam mit dem Schieber 22 in Richtung f zu verschieben, so daß die gesamte Anordnung 14, 22, 25, 32 entgegen der Fahrtrichtung a nach hinten verlagert werden kann, so daß ein Gleit-Hebedach gebildet ist. Selbstverständlich ist es in analog umgekehrter Weise möglich, die vorgenannte Gesamtanordnung wieder zurück in Richtung o zu verschieben, so daß wieder der Zustand gemäß Fig. 9 erreicht wird. Die Konsole 32 kann mit üblichen Mitteln, insbesondere mit Klemmitteln wie z.B. mittels einer Klemmschraube 33, an der Verbindungsstrebe 23 festgelegt werden.

Es ist ebenfalls möglich, den Schieber 22 mit gesonderten, der Klemmschraube 33 ähnlichen Mitteln festzulegen.

In den Fig. 11 und 12 ist ein ausstellbares Dachteil 10 gezeigt, welches hinsichtlich seiner Kinematik dem in den Fig. 5-10 gezeigten Ausführungsbeispiel entspricht. Im Unterschied dazu ist das hintere Ende 26 der Blattfeder 25 im wesentlichen parallel zur Flachstrebe 19 abgewinkelt und innerhalb des Gehäuses 34 eines Schwingungsdämpfers 35 aufgenommen. Das Gehäuse 34 ist mit einem dauerelastischen pastösen Kunststoff 36 ausgefüllt, welcher eine etwaige Relativbewegung des hinteren Endes bzw. des Anlenkungsendes 26 der Blattfeder 25 reibschlüssig erschwert und hierdurch dämpft. Als derartiger Kunststoff kann Butylkautschuk in entsprechender Konsistenz dienen. Das hintere Ende 26 der Blattfeder 25 kann mit einem gestrichelt angedeuteten mittleren Langloch 37 versehen sein, in welches eine als Anschlag dienende Schraube 38 mit Längsabstand zu den beiden Enden des Langlochs 37 eingreift. Auf diese Weise ist eine Sicherung gegen ein unbeabsichtigtes Ausziehen des Endes 26 aus dem lediglich einen Einführungsschlitz 39 aufweisenden, ansonsten aber allseitig geschlossenen Gehäuse 34, gewährleistet.

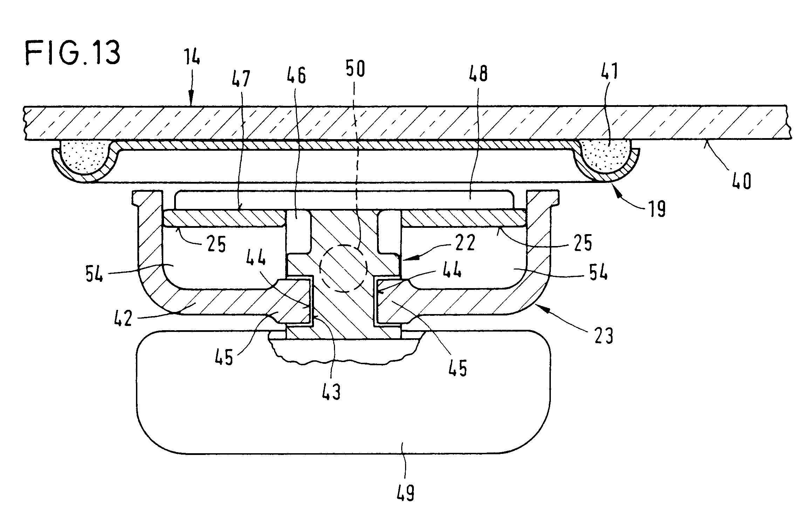

Aus Fig. 13 wird deutlich, daß die Flachstrebe 19 mit der Innenfläche 40 der Dachscheibe 14 über eine Klebstoffverbindung 41 befestigt ist. Die Flachstrebe 19 dient zugleich als eine die Verbindungsstrebe 23 abdeckende Sichtblende. Die Verbindungsstrebe 23 ist trogartig profiliert. Der Boden 42 der trogartig profilierten Verbindungsstrebe 23 ist unter Bildung eines Gleitführungsschlitzes 43 für den Schieber 22 in Längsrichtung zweigeteilt.

Der Schieber 22 weist an seinen beiden gegenüberliegenden Längsseiten je eine Führungsnut 44 zur Aufnahme je eines den Gleitführungsschlitz 43 in Längsrichtung begrenzenden Bodenbereichs 45 der Verbindungsstrebe 23 auf. Mit seinem dem Gleitführungsschlitz 43 abgewandten Bereich durchgreift der Schieber 22 einen Gleitführungsschlitz 46 zwischen den aus zwei Längsteilen bestehenden Blattfeder 25. Zugleich übergreift der Schieber 22 die Blattfeder 25 an ihrer der Dachscheibe 14 zugewandten Breitfläche 47 mit einem Niederhalter 48.

Zu seiner translatorischen Betätigung weist der Schieber 22 unterseitig einen Betätigungsgriff 49 auf.

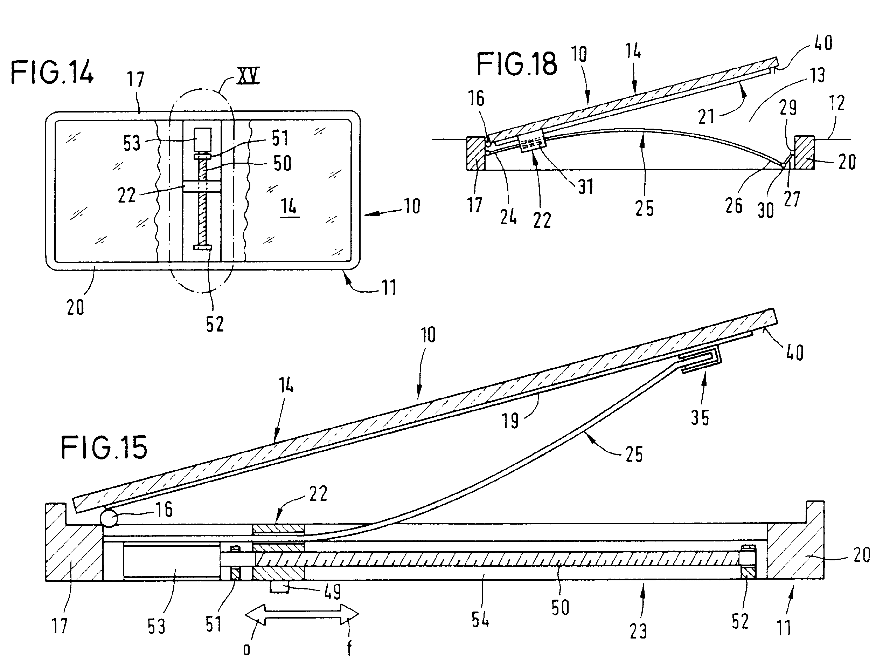

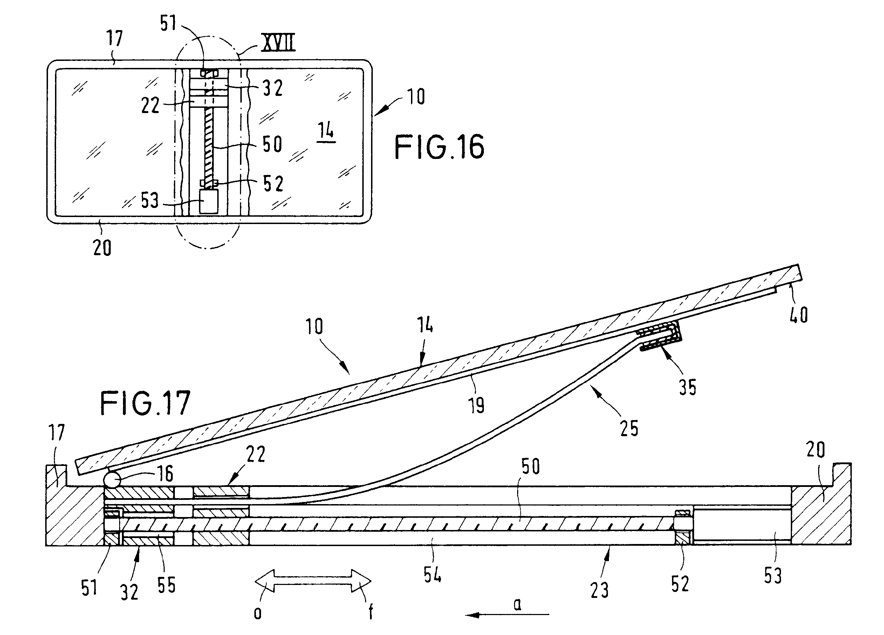

In den Fig. 14 und 15 ist schematisch gezeigt, wie die Öffnungs- oder Schließbewegung entlang den Richtungen o und f auch elektromechanisch ausgeführt werden kann. Hierzu ist innerhalb des Hohlraums 54 der trogartig profilierten Verbindungsstrebe 23 eine Gewindespindel 50 an Lagerkonsolen 51, 52 drehbar gelagert und axial unverschieblich gehalten. Die Gewindespindel 50 durchgreift den Schieber 22, der, wie auch in Fig. 13 gestrichelt angedeutet, durch den Schieber 22 hindurchgeführt ist, der im Durchführungsbereich als Gewindemutter ausgebildet ist und so nach Art eines Gewindetriebes mit der Gewindespindel 50 zusammenwirken kann. Die Gewindespindel 50 ist mittels eines Elektromotors 53 antreibbar.

Für den Fall, daß der vorbezeichnete Gewindetrieb mit hohem Wirkungsgrad als Kugelgewindespindel mit großer Steigung (also mit geringer Selbsthemmung) ausgeführt ist, besteht zudem die Möglichkeit, bei etwaigem Versagen des Elektromotors 53 den Schieber 22 unter Mitdrehen der Gewindespindel 50 auch von Hand zu betätigen.

Die Fig. 16 und 17 zeigen das motorisch angetriebene Dachteil gemäß den Fig. 14 und 15 in einer zu einem Gleithebedach abgewandelten Variante. Hierbei ist der Elektromotor 53 auf der dem Befestigungsgelenk 16 abgewandten Seite angeordnet. Im übrigen gilt die Reihenfolge Lagerkonsole 51, verschiebbare Konsole 32, Schieber 22, Lagerkonsole 52 und Elektromotor 53. Die Gewindespindel 50 durchsetzt hierbei die verschiebliche Konsole 32 in einer glatten Durchgangsbohrung 55 mit allseitigem Spiel. Auf diese Weise kann die Konsole 32 bei geöffneter Dachscheibe 14 gemeinsam mit dem Schieber 22 entgegen der Fahrtrichtung a nach rechts verschoben werden, wobei Gewindetrieb 50 und Motor 53 abgeschaltet sind und lose mitlaufen, wie bereits zuvor in Verbindung mit Fig. 7-11 beschrieben.

Ansonsten ist klar, daß bei den Ausführungsbeispielen gemäß den Fig. 16 und 17 die verschiebliche Konsole 32 mit in Fig. 17 nicht dargestellten Klemmitteln gegenüber der Verbindungsstrebe 23 lösbar arretiert sein muß, wenn der Schieber 22 die Dachscheibe 14 öffnen oder schließen (insbesondere schließen) soll.

In Fig. 18 ist die geometrische Umkehrung des in Fig. 4 dargestellten Ausführungsbeispiels gezeigt. Hierbei erstreckt sich der elastische Biegestab 25 zwischen den beiden Dachrahmenschenkeln 17 und 20, während die den Schieber 22 tragende Gleitbahn 21 an der Innenfläche 40 der Dachscheibe 14 befestigt ist. Die aus Fig. 18 ersichtlichen Bezugsziffern wurden den anderen Zeichnungen in analoger Weise entnommen.

Ergänzt werden muß noch, daß der kurze Lenker 27 mit seinen beiden Gelenken 29, 30 und der Schwingungsdämpfer 35 zugleich einen Längenausgleich darstellen, der für den Fall erforderlich ist, daß das vordere Ende 24 der Blattfeder 25 raumfest gehalten ist.

## Patentansprüche

1. Ausstellbares Dachteil (10) für Kraftwagen, insbesondere lichtdurchlässiges Sonnendach mit einer Dachscheibe (14) aus Glas o.dgl., mit mindestens einem die Dachscheibe (14) bezüglich des fahrzeugfesten Dachrahmens (11) haltenden, an einem vorderen bzw. ersten Scheibenrand (15) innen an der Dachscheibe (14) gehaltenen Befestigungsgelenk (16) sowie mit mindestens einem ausstellbaren Dachscheiben-Verschluß, welcher auf den dem vorderen bzw. ersten Scheibenrand (15) gegenüberliegenden zweiten, hinteren Scheibenrand (28) wirkt und zum einen ein an der Dachscheibe (14) zumindest im wesentlichen zug- und druckfest angeordnetes Verschlußteil (26) und zum andern ein mit letzterem beweglich verbundenes, mindestens mittelbar am Fahrzeugdach (20) gelagertes zusätzliches Verschlußteil (27) aufweist, dadurch gekennzeichnet, daß eines der beiden Verschlußteile eine sich mit ihrer Längsachse quer zur Achse (x) des Befestigungsgelenks (16) erstreckende starre Führungsbahn (21) und das andere Verschlußteil einen sich mit seiner Längsachse in der Ebene der Führungsbahn (21) erstreckenden, sich mindestens mittelbar auf letzterer abstützenden, vorgekrümmten, federelastischen Biegestab (25) bildet, welcher die Dachscheibe (14) mit seiner Rückstellkraft im Öffnungssinne beaufschlagt und welcher mittels eines von ihm durchsetzten an der Führungsbahn (21) geführten Schiebers (22) bei Annäherung an die Führungsbahn (21) in seine gespannte gestreckte Schließposition oder bei Distanzierung von der Führungsbahn (21) in seine entspannte gekrümmte Öffnungsposition versetzbar ist.

2. Ausstellbares Dachteil (10) nach Anspruch 1, dadurch gekennzeichnet, daß die starre Führungsbahn (21) zwischen zwei diametral gegenüberliegenden Dachrahmen-Schenkeln (17, 20) befestigt ist, während ein Anlenkungsende (26) des Biegestabes (25) zumindest im wesentlichen zug- und druckfest an der Dachscheibe (14) angelenkt ist und diese im Öffnungssinne beaufschlagt.

3. Ausstellbares Dachteil (10) nach Anspruch 1 oder nach Anspruch 2, dadurch gekennzeichnet, daß das dem Anlenkungsende (26) abgewandte Ende (24) des Biegestabes (25) gegen Relativverschiebung bezüglich der Führungsbahn (21) gesichert ist.

4. Ausstellbares Dachteil (10) nach Anspruch 3, dadurch gekennzeichnet, daß das dem Anlenkungsende (26) abgewandte Ende (24) des Biegestabes (25) an der Führungsbahn (21) arretiert ist.

5. Ausstellbares Dachteil (10) nach Anspruch 4, dadurch gekennzeichnet, daß das dem Anlenkungsende (26) abgewandte Ende (24) des Biegestabes (25) an der Führungsbahn (21) lösbar arretiert ist.

6. Ausstellbares Dachteil (10) nach Anspruch 5, dadurch gekennzeichnet, daß das dem Anlenkungsende (26) abgewandte Ende (24) des Biegestabes (25) an einer auf der Führungsbahn (21) lösbar verschieblichen Konsole (32) festgelegt ist.

7. Ausstellbares Dachteil (10) nach einem der vorangehenden Ansprüche, dadurch gekennzeichnet, daß Schieber (22) und Konsole (32) auf der Führungsbahn (21) gleitgeführt sind.

8. Ausstellbares Dachteil (10) nach Anspruch 7, dadurch gekennzeichnet, daß der Biegestab (25) den Schieber (22) in einer Gleitführung (31) durchsetzt.

9. Ausstellbares Dachteil (10) nach einem der vorangehenden Ansprüche, dadurch gekennzeichnet, daß die Anlenkungsstelle (bei 26) des Biegestabes (25) an der Dachscheibe (14) einen Längenausgleichsbereich (27, 29, 30; 35) bildet.

10. Ausstellbares Dachteil (10) nach Anspruch 9, dadurch gekennzeichnet, daß der Längenausgleichsbereich einen im Verhältnis zur Gesamtlänge des Biegestabes (25) kurzen Lenker (27) darstellt, dessen eines Ende über ein Gelenk (29) mit der Dachscheibe (14) und dessen anderes Ende über ein Gelenk (30) mit dem Biegestab (25) verbunden ist.

11. Ausstellbares Dachteil (10) nach Anspruch 9 oder nach Anspruch 10, dadurch gekennzeichnet, daß der Längenausgleichsbereich von einem Schwingungsdämpfer (35) gebildet ist.

12. Ausstellbares Dachteil (10) nach Anspruch 11, dadurch gekennzeichnet, daß der Schwingungsdämpfer (35) aus einem in Richtung des Biegestabes (25) offenen, unterseitig der Dachscheibe (14) befestigten ansonsten ringsum geschlossenen Gehäuse (34) besteht, welches mit einem dauerelastischen Kunststoff (36) von etwa pastöser Konsistens gefüllt ist, welcher den in den Behälter (34) etwa plungerartig eintauchenden Endbereich (26) des Biegestabes (25) umschließt.

13. Ausstellbares Dachteil (10) nach Anspruch 12, dadurch gekennzeichnet, daß der Endbereich (26) des Biegestabes (25) auszugsgesichert im Gehäuse (34) des Schwingungsdämpfers (35) aufgenommen ist.

14. Ausstellbares Dachteil (10) nach einem der vorangehenden Ansprüche, dadurch gekennzeichnet, daß die translatorische Bewegung des Schiebers (22) über einen Motor (53) erfolgt.

15. Ausstellbares Dachteil (10) nach Anspruch 14, dadurch gekennzeichnet, daß der gegenüber der Führungsbahn (21) festgelegte Motor (53) eine entlang der Führungsbahn (21) angeordnete Gewindespindel (50) treibt, welche eine im Schieber (22) festgelegte Gewindemutter nach Art eines Gewindetriebs durchsetzt.

16. Ausstellbares Dachteil (10) nach Anspruch 15, dadurch gekennzeichnet, daß der Motor (53) auf der dem Befestigungsgelenk (16) abgewandten Bereich bezüglich der Führungsbahn (21) festgelegt ist und daß die Gewindespindel (50) die verschiebliche Konsole (32) in einer glatten Durchgangsbohrung (55) frei durchsetzt.

17. Ausstellbares Dachteil (10) nach einem der vorangehenden Ansprüche, dadurch gekennzeichnet, daß die Führungsbahn für den Schieber (22) an einem trogartig profilierten Gleitbahnteil (21) ausgebildet ist und den Biegestab (25) sowie gegebenenfalls die Konsole (32) und/oder den Schieber (22) und/oder den motorischen Schieberantrieb (50-53) innerhalb des trogförmigen Hohlraums (54) aufnimmt.

18. Ausstellbares Dachteil (10) nach Anspruch 17, dadurch gekennzeichnet, daß der Biegestab eine Blattfeder (25), insbesondere aus Federstahl, ist.

19. Ausstellbares Dachteil (10) nach Anspruch 17 oder 18, dadurch gekennzeichnet, daß die Blattfeder (25) zur Bildung eines Gleitführungsschlitzes (46) für den Schieber (22) bzw. für die Konsole (32) in Längsrichtung zweigeteilt oder längsgeschlitzt ist.

20. Ausstellbares Dachteil (10) nach einem der Ansprüche 17 bis 19, dadurch gekennzeichnet, daß der Boden (42) des trogartigen Gleitbahnteils (21) zur Bildung eines die Gleitbahn darstellenden Gleitführungsschlitzes (43) für den Schieber (22) in Längsrichtung zweigeteilt oder längsgeschlitzt ist.

21. Ausstellbares Dachteil (10) nach Anspruch 20, dadurch gekennzeichnet, daß der Schieber (22) an seinen beiden gegenüberliegenden Längsseiten je eine Führungsnut (44) zur Aufnahme je eines den Gleitführungsschlitz (43) in Längsrichtung begrenzenden Bodenbereichs (45) des trogartigen Gleitbahnteils (21) aufweist.

22. Ausstellbares Dachteil (10) nach Anspruch 21, dadurch gekennzeichnet, daß der Schieber (22) an seinem den zugehörigen Gleitführungsschlitz (43) abgewandten Bereich den Gleitführungsschlitz (46) der Blattfeder (25) durchgreift und letztere mit einem Niederhalter (48) übergreift.

23. Ausstellbares Dachteil (10) nach einem der vorangehenden Ansprüche, dadurch gekennzeichnet, daß innenseitig der Dachscheibe (14) eine die Führungsbahn (21) sowie den Biegestab (25) abdeckende Flachstrebe (19) befestigt, insbesondere verklebt, ist.

## Claims

1. An openable roof element (10) for motor vehicles, more particularly a transparent sunroof having a roof panel (14) made of glass or the like, comprising at least one securing hinge (16), which secures the roof panel (14) relative to the vehicle-fixed roof frame (11) and is mounted on a front or first panel edge (15) on the inside of the roof panel (14), and comprising at least one openable roof panel closing mechanism, which acts upon the second rear panel edge (28) opposite the front or first panel edge (15) and on the one hand comprises a closing element (25) arranged on the roof panel (14) at least in a substantially tension and pressure-resistant manner and on the other hand an additional closing element (27), which is displaceably connected with the first closing element (25) and is mounted at least indirectly on the vehicle roof (20), characterised in that one of the two closing elements forms a rigid guide track (21) extending with its longitudinal axis transverse to the axis (x) of the securing hinge (16) and the other closing element forms a prebent, spring-elastic flexible bar (25), which extends with its longitudinal axis in the plane of the guide track (21), is supported at least indirectly upon said guide track (21), acts upon the roof panel (14) with its restoring force in the direction of opening and is displaceable by means of a sliding member (22) penetrated by the flexible bar (25) and guided on the guide track (21) by being moved towards the guide track (21) into its tensioned straight closed position or by being moved away from the guide track (21) into its relaxed curved open position.

2. An openable roof element (10) according to claim 1, characterised in that the rigid guide track (21) is secured between two diametrally opposed roof frame limbs (17, 20), whilst a hinged end (26) of the flexible bar (25) is articulatedly connected to the roof panel (14) at least in a substantially tension and pressure-resistant manner and acts upon said roof panel in the direction of opening.

3. An openable roof element (10) according to claim 1 or 2, characterised in that the end (24) of the flexible bar (25) facing away from the hinged end (26) is secured against relative displacement in relation to the guide track (21).

4. An openable roof element (10) according to claim 3, characterised in that the end (24) of the flexible bar (25) facing away from the hinged end (26) is locked on the guide track (21).

5. An openable roof element (10) according to claim 4, characterised in that the end (24) of the flexible bar (25) facing away from the hinged end (26) is releasably locked on the guide track (21).

6. An openable roof element (10) according to claim 5, <u>characterised in that</u> the end (24) of the flexible bar (25) facing away from the hinged end (26) is secured to a bracket (32) which is releasably displaceable on the guide track (21).

7. An openable roof element (10) according to one of the preceding claims, <u>characterised in that</u> the sliding member (22) and bracket (32) are guided so as to slide along the guide track (21).

8. An openable roof element (10) according to claim 7, <u>characterised in that</u> the flexible bar (25) penetrates the sliding member (22) in a slide guide (31).

9. An openable roof element (10) according to one of the preceding claims, <u>characterised in that</u> the hinged connection point (at 26) of the flexible bar (25) and the roof panel (14) forms a length compensating region (27, 29, 30; 35).

10. An openable roof element (10) according to claim 9, <u>characterised in that</u> the length compensating region is a link rod (27), which is short in relation to the overall length of the flexible bar (25), one end of said link rod being connected via a hinge (29) with the roof panel (14) and the other end of the link rod being connected via a hinge (30) with the flexible bar (25).

11. An openable roof element (10) according to claim 9 or claim 10, <u>characterised in that</u> the length compensating region is formed by a vibration damper (35).

12. An openable roof element (10) according to claim 11, <u>characterised in that</u> the vibration damper (35) comprises a housing (34), which is secured to the underside of the roof panel (14), is open in the direction of the flexible bar (25) but otherwise closed on all sides and is filled with a permanently elastic plastics material (36), which has a paste-like consistency for instance and encloses the end region (26) of the flexible bar (25) which penetrates the container (34) for example in the manner of a plunger.

13. An openable roof element (10) according to claim 12, <u>characterised in that</u> the end region (26) of the flexible bar (25) is accommodated in the housing (34) of the vibration damper (35) so as to be secured against withdrawal.

14. An openable roof element (10) according to one of the preceding claims, <u>characterised in that</u> the translatory movement of the sliding member (22) is effected via a motor (53).

15. An openable roof element (10) according to claim 14, <u>characterised in that</u> the motor (53) which is fixed relative to the guide track (21) drives a threaded spindle (50), which is arranged along the guide track (21) and in the manner of a thread drive penetrates a threaded nut fixed in the sliding member (22).

16. An openable roof element (10) according to claim 15, <u>characterised in that</u> the motor (53) is fixed relative to the guide track (21) in the region remote from the securing hinge (16) and the threaded spindle (50) freely penetrates the displaceable bracket (32) in a smooth through bore (55).

17. An openable roof element (10) according to one of the preceding claims, <u>characterised in that</u> the guide track for the sliding member (22) is formed on a trough-shaped profiled slide track element (21) and within the trough-shaped cavity (54) accommodates the flexible bar (25) and optionally the bracket (32) and/or the sliding member (22) and/or the motor slide drive (50-53).

18. An openable roof element (10) according to claim 17, <u>characterised in that</u> the flexible bar is a leaf spring (25), more particularly made of spring steel.

19. An openable roof element (10) according to claim 17 or 18, <u>characterised in that</u> the leaf spring (25) is divided in two in the longitudinal direction or is longitudinally slotted to form a sliding guide slot (46) for the sliding member (22) or for the bracket (32).

20. An openable roof element (10) according to one of claims 17 to 19, <u>characterised in that</u> the base (42) of the trough-like sliding track element (21) is divided in two in the longitudinal direction or is longitudinally slotted to form a sliding guide slot (43) representing the slide track for the sliding member (22).

21. An openable roof element (10) according to claim 20, <u>characterised in that</u> on both opposite longitudinal sides, the sliding member (22) comprises a guide groove (44) in each case for receiving a base region (45) of the trough-like sliding track element (21) defining the sliding guide slot (43) in the longitudinal direction.

22. An openable roof element (10) according to claim 21, <u>characterised in that</u>, in the region of the sliding guide slot (43) facing away from the associated sliding guide slot (43), the sliding member (22) penetrates the leaf spring (25) and overlaps the latter with a holding-down element (48).

23. An openable roof element (10) according to one of the preceding claims, <u>characterised in that</u> a flat strut (19) covering the guide track (21) and the flexible bar (25) is secured, more particularly bonded, to the inside of the roof panel (14).

## Revendications

1. Elément de toit (10) à mouvement de projection, pour véhicule automobile, en particulier toit solaire transparent ou translucide, comprenant une trappe de toit (14) en verre ou équivalent, qui présente au moins une articulation de fixation (16) qui maintient la trappe (14) du toit par rapport au cadre (11) du toit, qui est solidaire du véhicule, qui est fixée à un bord avant ou premier bord (15) de la trappe, contre la trappe (14) en position intérieure, ainsi qu'au moins une fermeture de trappe de toit à mouvement de projection qui agit sur le deuxième bord, ou bord arrière (28) de la trappe, qui est à l'opposé du bord avant ou premier bord (15) de la trappe, et, d'une part, un élément de fermeture (26) monté sur la trappe (14) du toit, au moins essentiellement rigidement à la traction et à la compression et, d'autre part, un élément de fermeture (27) additionnel, qui est relié mobile avec le premier élément de fermeture avec possibilité de mouvement, et qui est monté au moins indirectement sur le toit (20) du véhicule, caractérisé en ce qu'un des deux éléments de fermeture forme une voie de guidage (21) rigide dont l'axe longitudinal s'étend transversalement à l'axe (x) de l'articulation de fixation (16), tandis que l'autre élément de fermeture forme une barre flexible (25) élastique à la façon d'un ressort, précourbée, dont l'axe longitudinal s'étend dans le plan de la voie de guidage (21) et qui prend appui sur cette voie, au moins indirectement, cette barre flexible chargeant la trappe (14) du toit dans le sens de l'ouverture par sa force de rappel, et cette barre pouvant être amenée, au moyen d'un coulisseau (22) qu'elle traverse et qui est guidé le long de la voie de guidage (21), dans sa position de fermeture redressée et tendue, lorsqu'elle se rapproche de la voie de guidage (21), ou dans sa position d'ouverture courbe détendue, lorsqu'elle s'éloigne de la voie de guidage (21).

2. Elément de toit (10) à mouvement de projection, selon la revendication 1, caractérisé en ce que la voie de guidage rigide (21) est fixée entre deux branches (17, 20) du cadre du toit qui sont diamétralement opposées, tandis qu'une extrémité d'articulation (26) de la barre flexible (25) est articulée sur la trappe (14) du toit, par une liaison au moins sensiblement rigide à la traction et à la compression, et charge cette trappe dans le sens de l'ouverture.

3. Elément de toit (10) à mouvement de projection selon la revendication 1 ou la revendication 2, caractérisé en ce que l'extrémité (24) de la barre flexible (25) qui est à l'opposé de l'extrémité d'articulation (26) est bloquée en translation relative par rapport à la voie de guidage (21).

4. Elément de toit (10) à mouvement de projection selon la revendication 3, caractérisé en ce que l'extrémité (24) de la barre flexible (25) qui est la plus éloignée de l'extrémité d'articulation (26) est bloquée contre la voie de guidage (21).

5. Elément de toit (10) à mouvement de projection selon la revendication 4, caractérisé en ce que l'extrémité (24) de la barre flexible (25) qui est la plus éloignée de l'extrémité d'articulation (26) est bloquée contre la voie de guidage (21) par une liaison démontable.

6. Elément de toit (10) à mouvement de projection selon la revendication 5, caractérisé en ce que l'extrémité (24) de la barre flexible (25) qui est la plus éloignée de l'extrémité d'articulation (26) est fixée sur une console (32) qui peut se déplacer librement en translation sur la voie de guidage (21).

7. Elément de toit (10) à mouvement de projection selon une des revendications précédentes, caractérisé en ce que le coulisseau (22) et la console (32) sont guidés mobiles en coulissement sur la voie de guidage (21).

8. Elément de toit (10) à mouvement de projection selon la revendication 7, caractérisé en ce que la barre flexible (25) traverse le coulisseau (22) dans une coulisse (31).

9. Elément de toit (10) à mouvement de projection selon une des revendications précédentes, caractérisé en ce que le point d'articulation (en 26) de la barre flexible (25) sur la trappe (14) du toit forme une région (27, 29, 30 ; 35) de compensation de la longueur.

10. Elément de toit (10) à mouvement de projection selon la revendication 9, caractérisé en ce que la région de compensation de la longueur est représentée par une biellette (27) courte, relativement à la longueur totale de la barre flexible (25), dont une extrémité est reliée à la trappe (14) du toit par une articulation (29) et dont l'autre extrémité est reliée à la barre flexible (25) par une articulation (30).

11. Elément de toit (10) à mouvement de projection selon la revendication 9 ou selon la revendication 10, caractérisé en ce que la région de compensation de la longueur est formée par un amortisseur de vibrations (35).

12. Elément de toit (10) à mouvement de projection selon la revendication 11, caractérisé en ce que l'amortisseur de vibrations (35) est composé d'un boîtier (34) qui s'ouvre en direction de la barre flexible (25), qui est fermé de tous côtés par ailleurs et qui est fixé à la trappe (14) du toit, sur sa face inférieure, bottier qui est rempli d'une matière plastique (36) durablement élastique, d'une consistance à peu près pâteuse, laquelle renferme la région d'extrémité (26) de la barre flexible (25) qui plonge dans le boîtier (34) à la façon d'un piston plongeur.

13. Elément de toit (10) à mouvement de projection selon la revendication 12, caractérisé en ce que la région d'extrémité (26) de la barre flexible (25) est logée dans le boîtier (34) de l'amortisseur de vibrations (35) par une liaison arrêtée dans le sens de l'extraction.

14. Elément de toit (10) à mouvement de projection selon une des revendications précédentes, caractérisé en ce que le mouvement de translation du coulisseau (22) est commandé par l'intermédiaire d'un moteur (53).

15. Elément de toit (10) à mouvement de projection selon la revendication 14, caractérisé en ce que le moteur (43) qui est fixé relativement à la voie de guidage (21) entraîne une vis (50) disposée le long de la voie de guidage (21) et qui traverse un écrou fixé dans le coulisseau (22), pour former un entraînement à vis et écrou.

16. Elément de toit (10) à mouvement de projection selon la revendication 15, caractérisé en ce que le moteur (53) est fixé par rapport à la voie de guidage (21) sur la région qui est la plus éloignée de l'articulation de fixation (16) et en ce que la vis (50) traverse librement la console (32) mobile en translation, dans un passage traversant lisse (55).

17. Elément de toit (10) à mouvement de projection selon une des revendications précédentes, caractérisé en ce que la voie de guidage servant à guider le coulisseau (22) est formée sur un élément de glissière (21) à profil en auge, et reçoit la barre flexible (25) ainsi qu'éventuellement la console (32) et/ou le coulisseau (22) et/ou l'entraînement à moteur (50-53) du coulisseau à l'intérieur de la cavité (54) en forme d'auge.

18. Elément de toit (10) à mouvement de projection selon la revendication 17, caractérisé en ce que la barre flexible est un ressort lame (25), en particulier en acier à ressorts.

19. Elément de toit (10) à mouvement de projection selon la revendication 17 ou 18, caractérisé en ce que le ressort lame (25) est divisé en deux parties dans la direction longitudinale, ou muni d'une fente longitudinale, pour former une fente (46) formant glissière pour le coulisseau (22) ou pour la console (32).

20. Elément de toit (10) à mouvement de projection selon une des revendications 17 à 19, caractérisé en ce que le fond (42) de la glissière (21) en auge est divisé,en deux parties dans le direction longitudinale ou muni d'une fente longitudinale pour former la fente (43) formant glissière représentant la glissière servant à guider le coulisseau (22).

21. Elément de toit (10) à mouvement de projection selon la revendication 20, caractérisé en ce que le coulisseau (22) présente sur chacun de ses deux côtés longitudinaux opposés une rainure de guidage (44) destinée à recevoir une région du fond (45) de la partie (21) en forme d'auge formant glissière, qui limite la fente de coulisse (43) dans la direction longitudinale.

22. Elément de toit (10) à mouvement de projection selon la revendication 21, caractérisé en ce que dans sa région la plus éloignée de la fente de coulisse correspondante (43), le coulisseau (22) traverse la fente de coulisse (46) du ressort lame (25) et déborde à l'extérieur de ce ressort en formant un presseur (48).

23. Elément de toit (10) à mouvement de projection, selon une des revendications précédentes, caractérisé en ce qu'une barre plate (19) qui recouvre la voie de guidage (21) ainsi que la barre flexible (25) est fixée, en particulier collée, à la trappe (14) du toit, sur la face intérieure de celle-ci.

FIG.1

FIG.2

FIG.3

FIG.4

FIG.5

FIG.6

FIG.7

FIG.8

FIG.9

FIG.10

FIG.11

FIG.12

14

FIG.13

FIG.14

FIG.18

FIG.15

EP 0 370 250 B1

FIG.16

FIG.17

EP 0 370 250 B1